# EUROPEAN PATENT SPECIFICATION

(11) **EP 0 537 202 B1**
(45) Date of publication and mention of the grant of the patent: **28.02.1996**
(21) Application number: 91911430.6
(22) Date of filing: 18.06.1991
(51) Int. Cl.: C04B 18/10, C04B 28/04

(54) **HIGHLY DURABLE CEMENT PRODUCTS CONTAINING SILICEOUS ASHES**
SEHR DAUERHAFTE, KIESELSÄUREHALTIGE ASCHEN ENTHALTENDE ZEMENTPRODUKTE
PRODUITS DE CIMENT EXTREMEMENT DURABLES CONTENANT DES CENDRES SILICIEUSES

(30) Priority: 25.06.1990 US 543262
(43) Date of publication of application: 21.04.1993
(73) Proprietor: THE REGENTS OF THE UNIVERSITY OF CALIFORNIA, Oakland, California 94612-3550 (US)
(72) Inventor: MEHTA, Provindar, K., El Cerrito, CA 94530 (US)
(74) Representative: Brown, David Leslie
(86) International application number: US9104139
(87) International publication number: WO9200251

(56) References cited:
- FR-A- 2 621 036
- US-A- 3 959 007
- US-A- 4 105 459
- US-A- 4 210 457
- US-A- 4 659 679
- US-A- 4 829 107
- SPRECHSAAL vol. 121, no. 11, November 1988, COBURG DE pages 1081 - 1084 , XP000025103 I.SACHER 'Contributions to the Use of Rice Husks and Rice Husk Ash in Ceramics'
- CHEMICAL ABSTRACTS, vol. 101, no. 18, 29 October 1984, Columbus, Ohio, US; abstract no. 156582f & JP-A-59 088 354 (MATSUSHITA ELECTRIC WORKS LTD) 22 May 1984

## Description

The present invention relates to a novel anhydrous blend of portland cement and siliceous ash, to novel cement compositions, to a method for reducing the permeability of hardened cement products and to a method for accelerating the early strength of concrete mixtures. A certain type of ash can be made from the controlled incineration of certain siliceous crop residues, such as rice hull and rice straw. This ash consists of cellular particles with silica held essentially in the non-crystalline (amorphous) state and is known to be used as a pozzolanic material in the preparation of blended hydraulic cements (See, U.S. Patent 4,105,459, August 8, 1978, to Povindar K. Mehta. An hydraulic cement is a dry powder which, upon mixing with water, sets and becomes a hardened solid mass forming a water resistant product.

Since the crystalline forms of silica, such as cristobalite, tridymite, and quartz, are known to cause lung cancer and other serious respiratory diseases, the federal and state agencies for environmental protection are quite concerned that the disposal of rice hull and rice straw by burning should not result in ash which contains a significant amount of crystalline silica. Consequently, industrial furnaces of various designs are being used in cogeneration plants, which not only produce rice hull ash (RHA) by burning rice hulls efficiently (that is the unburnt carbon in the ash is usually held to less than 10% by weight) but also produce a material containing essentially amorphous or noncrystalline silica. Hydraulic cements blended with siliceous RHA containing 20 to 30% by weight of portland cement and 70-80% by weight of the ash are disclosed in U.S. Patent 4,105,459. The majority of ash particles in these blends are probably larger than 75 micrometers (µm) .

Concrete and mortar compositions made from ultra-fine (i.e. particles with a median diameter of 1 to 3 micrometers) RHA slurries of approximately 7.5% to 15% RHA by weight of the combined weight of the ash and portland cement have been disclosed. (See, U.S. Patent No. 4,829,107 to L.J. Kindt). These compositions were found to have a marked decrease in chloride permeability upon hardening. However, the Kindt patent also disclosed that compositions containing RHA having a particle median diameter of greater than 4 micrometers did not exhibit low permeability and had a chloride permeability equivalent to mortars and concretes that contained no RHA. Even though only admixtures (i.e. slurries) are discussed and claimed in the Kindt patent, the Kindt patent states that RHA having a median particle diameter of 4 micrometers or less can be used in dry powder form. However, due to the high surface charges developed by ultra-fine grinding, the powder of the Kindt patent tends to flocculate and attempts to add such RHA in dry form to a concrete mixture using the standard mixing procedure (ASTM C 192) gave a nonuniform dispersion.

One aim of this invention is provide a novel blend of crop residue siliceous ash and cement. Another aim of this invention is to provide a novel blend of crop residue siliceous ash, fly ash and cement.

A further aim of this invention is to provide novel hydraulic cement compositions.

Another aim of this invention is to provide hydraulic cement compositions prepared from crop residue siliceous ash whereby the cement composition has high strength and low permeability or very low permeability to water and chloride ions.

Still a further aim of this invention is to provide a method for decreasing the water and chloride ion permeability of cement products.

Yet another aim of this invention is to provide a method for accelerating the early strength of concrete mixtures containing fly ash.

In one aspect, the present invention therefore provides a composition for use in concrete or mortar comprising a cement selected from portland cements and pozzolan-portland blended hydraulic cements and from 5-30% siliceous ash by weight of cement, said ash being from crop residue and from 60-95% by weight of silica and at least 90% of said silica is amorphous, wherein at least 10% of said ash particles have a size greater than 75 micrometers and the ash particles have a mean particle diameter measured by laser-light-scattering of at least 6 micrometers and a B.E.T surface area of at least 20 m/g.

The median particle diameter of the ash particles may be from 15 to 38 micrometers and the crop residue from which the ash is obtained may be rice hulls.

In one form of the invention the cement and the ash may be anhydrous.

The pozzolan-portland blended hydraulic cement may be Type I (PM) or Type IP hydraulic cement.

The composition may comprise 10-30% ash, by weight of cement, more particularly 10-15% or 15-30%.

In another aspect, the invention provides a cement product comprising such a composition, fine aggregate and coarse aggregate.

In another aspect, the invention provides a method for obtaining a cement product having a better than moderate permeability comprising (a) mixing a hydraulic cement composition comprising effective amounts of a composition according to the first aspect of the invention, fine aggregate, coarse aggregate and water; and (b) allowing the cement composition to harden.

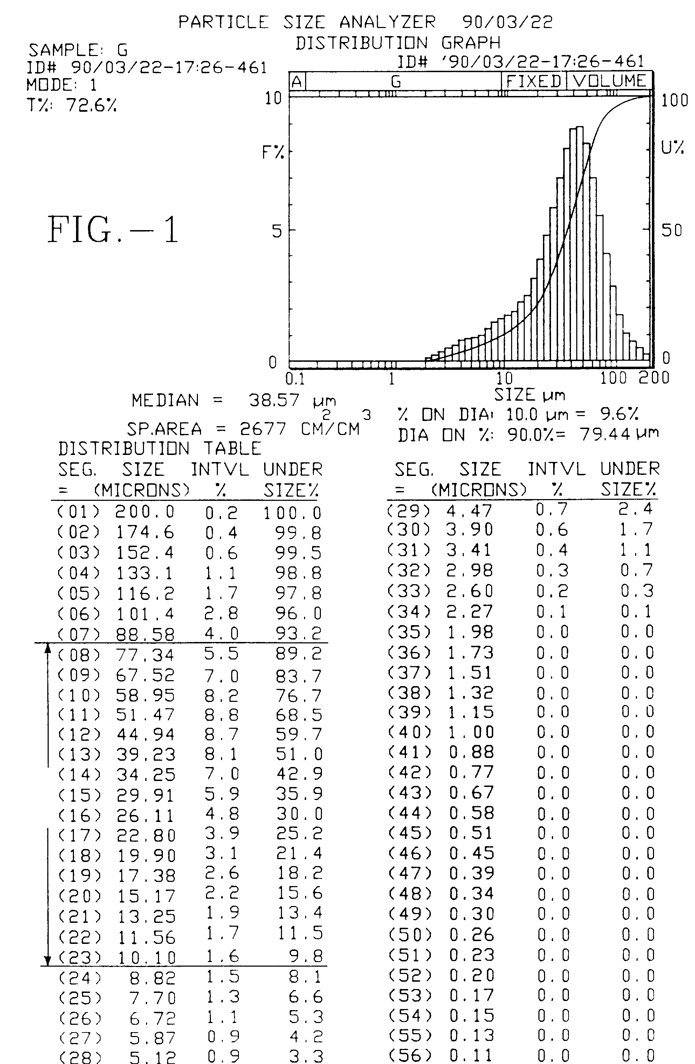

BRIEF DESCRIPTION OF THE DRAWINGS Figure 1 illustrates data in table and graphical form obtained from the particle size distribution analysis of a sample of ground RHA.

Figure 2 shows data in table and graphical form obtained from the particle size distribution analysis of a sample of ultra-finely ground RHA.

Figure 3 is a schematic diagram illustrating the standard apparatus used in the chloride permeability test.

Figure 4 shows data in graphical form obtained from the particle size distribution analysis of ordinary portland cement (ASTM C 150, Type I Portland Cement).

### DETAILED DESCRIPTION OF THE INVENTION

This invention describes the use of a siliceous ash, obtained from the burning of crop residues such as rice hull (also called rice husk), which is used as a mineral addition for making cement products.

According to RILEM Committee 73-SBC Report (Jour. of Structures and Materials, January 1988, p.89), the term "mineral addition" is used for inorganic materials, both natural materials and industrial byproducts, that are used in quantities of 5% or more by mass of the cement. Mineral additions may be blended or interground with portland cement, or added directly to concrete before or during mixing.

The upper limit of the mineral addition in cement compositions of this invention is defined by the ASTM Standard Specification C 595 for Type I(PM) and Type IP blended hydraulic cements. Type I(PM) is a pozzolan-modified portland cement produced either by intergrinding portland cement clinker and pozzolan, or by blending portland cement and finely divided pozzolan, in which the pozzolan content is less than 15% by weight of the pozzolan-modified portland cement. A pozzolan is an inorganic material which consists principally of chemically reactive siliceous or siliceous and aluminous compounds and which, in the presence of moisture, is capable of reacting with lime (calcium hydroxide, Ca(OH)₂), to form a hardened mass of calcium silicate hydrates and calcium aluminate hydrates. Type IP is a portland-pozzolan cement produced either by intergrinding portland cement clinker and pozzolan or by blending portland cement and finely divided pozzolan, in which the pozzolan constituent is between 15 and 40 weight % of the portland-pozzolan cement.

### CONCRETE PERMEABILITY REDUCTION

The siliceous rice hull ashes used herein are generally of the "highly pozzolanic type", as described in the RILEM 73-SBC Report. According to this report, the controlled incineration of rice hulls produces a cellular product of high surface area and silica mostly in the amorphous state, two factors which are responsible for the high pozzolanicity. However, a rice hull ash which is relatively less amorphous, such as RHA No. 3 (See, Table 1), may also be used in this invention.

Random samples of RHA were obtained from rice-hullburning furnaces of different designs, which are located in three different States of the U.S. (See, Table 1). Two of the ashes, namely RHA No. 1 and RHA No. 2, contained 4.9 and 5.5% carbon respectively. RHA No. 3 was found to contain 35% carbon. By X-ray diffraction analysis it was determined that RHA No. 1 and RHA No. 2 contained 100% and 99% silica in the amorphous state, respectively. By quantitative X-ray diffraction analysis, it was estimated that 90% of the silica present in RHA No. 3 is in the amorphous state, the remaining being in the form of cristobalite.

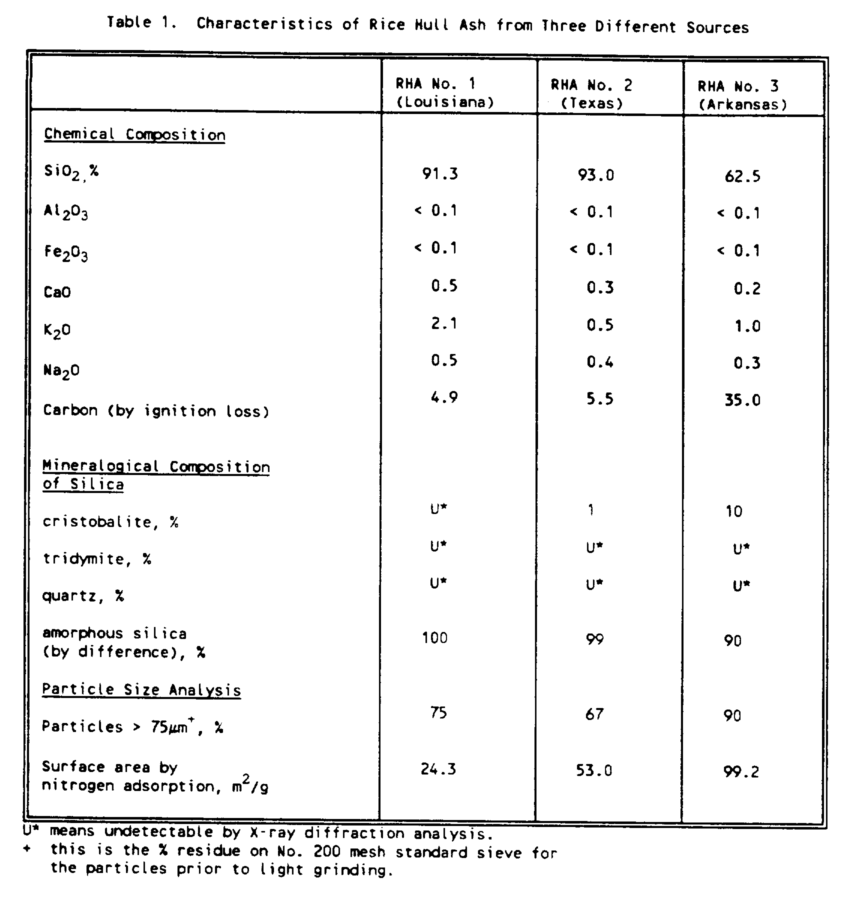

Table 1 also shows the particle size (i.e. effective diameter) analysis of the three ashes. It should be noted that, although the bulk of particles in each ash are larger than 75µm (67 to 90% particles are retained on No. 200 mesh standard sieve), the cellular character of the particles (as illustrated by a typical scanning electron micrograph shown in the U.S. Patent 4,105,459) is evident from the very high B.E.T. surface area values (24.3 to 99.2), as determined by the nitrogen adsorption technique (Monosorb Apparatus, Quantachrome Corp.). All three ashes shown in Table 1 conformed to the silica described in U.S. Patent 4,105,459, which covers ashes (originating from agricultural matter) containing 49 to 98% silica in highly amorphous form (the balance being mainly residual carbon) and having 10 to 100m/g B.E.T. surface area by nitrogen adsorption. Blended portland cements were prepared by mixing 20 to 30% by weight of a Type I portland cement (meeting ASTM C 150 standard specification) and 70 to 80% of any one of the three ashes shown in Table 1, after the ashes had been lightly ground for 15 minutes in a laboratory ball mill. These preparations produced hydraulic cements of satisfactory setting and hardening (strength) properties confirming the disclosures of U.S. Patent 4,105,459..

Blended cements are produced either by intergrinding a suitable additive with portland cement clinker or by mixing portland cement with a finely ground additive. Although fine grinding of the ash prior to making a blended cement is not necessary for the purpose of increasing the surface area and reactivity, a light grinding treatment to pulverize the very large particles (i.e. particles having a median diameter of >75µm) is thought to be helpful in producing a more homogeneous ash-portland cement blend. This, is not necessary for blended cements produced by intergrinding. Unless otherwise indicated, the ashes used in this invention and described below were lightly ground such that there was approximately a 10% residue when tested by wet screening on a No. 200 mesh sieve (i.e., after light grinding about 10% of the particles are still larger than 75µm but 90% are now smaller than 75µm). Typical particle size analysis of the lightly ground sample of RHA No. 1 (also identified as Sample G) is shown in Figure 1. The data in Figure 1 show that 89.3% of the particles are less than 77µm size and only 9.7% of the particles are below 10µm size. This means that 80% of the particles are in the 10-77µm size range. The particle size analysis shown in Figures 1, 2 and 4 were carried out by the Horiba Apparatus (Model LA-500), using laser-light scattering of a dispersed sample.

The chemical and physical characteristics of a normal portland cement meeting the ASTM C 150 requirements for Type I portland cement, which was used in the experiments described in this invention, are shown in Table 2. A crushed limestone aggregate from the San Francisco bay area (1.3 cm (1/2 inch) maximum size) was used as the coarse aggregate, and a quartzitic sand with 3.0 fineness modulus was used as the fine aggregate for making the concrete mixtures of this invention. The term hydraulic cement composition as used herein refers to any composition that contains cement, water and a fine or coarse aggregate and will set and become a hardened solid mass. The term cement product refers to any hardened product, other than cement paste, resulting from the hydration of a hydraulic cement and includes hardened concretes and mortars. As used herein, a mortar product is any cement product that is obtained by mixing a cement, a fine aggregate and water, a concrete product is any cement product that is obtained by mixing a cement, a fine aggregate and a coarse aggregate and water.

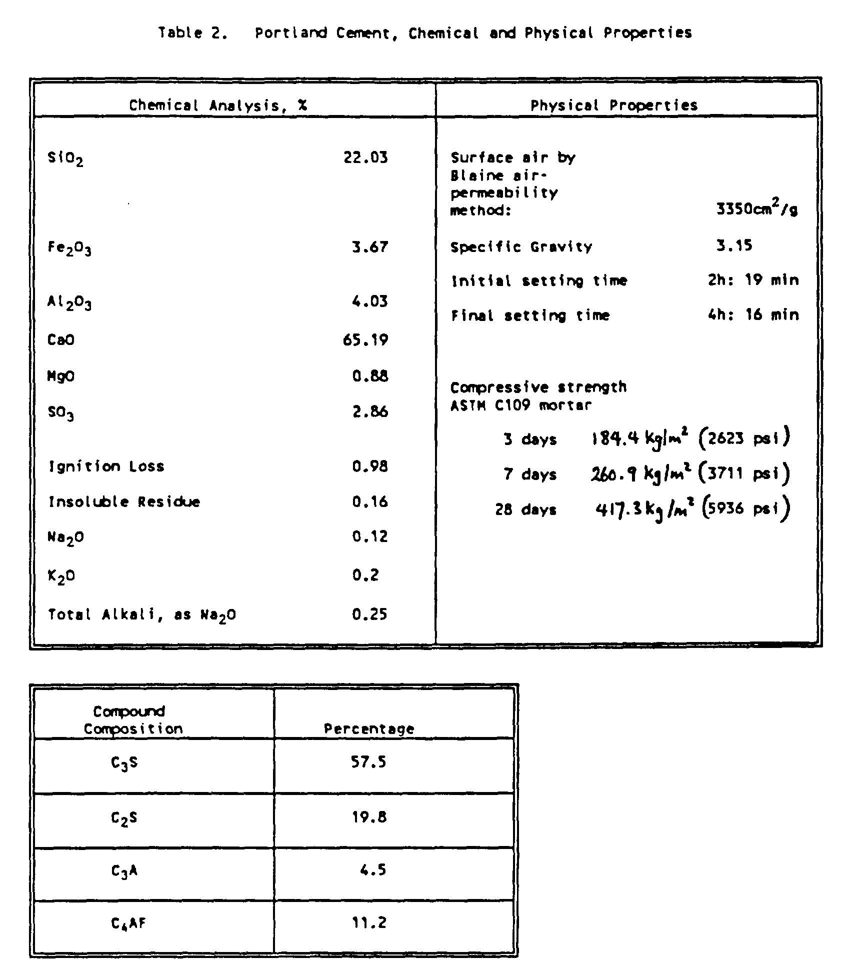

For durability to severe environmental exposure, the American Concrete Institute (ACI Committee 201 on durability) recommends the use of concrete with less than a 0.4 water/cement ratio. Since modern construction practice, such as placement of concrete by pumping and the use of highly reinforced structures, requires high consistency of fresh concrete, a combination of low water/cement ratio and high consistency (about a 15.2-25.4 (6-10 inch.) slump) is usually achieved by incorporating a superplasticizing admixture (i.e. a Class F High-range water reducer meeting the ASTM C 494 Standard Specification). A commercially available naphthalene-sulfonate type superplasticizer was used in all concretes described here. The superplasticizer was used in the form of a solution in water, containing 40% solids by weight.

Mix proportions for high-strength superplasticized concrete mixtures were obtained for 20.3-25.4 cm (8-10 inches) slump and 632.8-773.4 kg/cm (9000-11,000 psi) strength range (28-d compressive strength). Laboratory tests showed that a maximum water/cement ratio of 0.34, and a minimum cement content, of 372 kg/m³ (630 lb/yd³) were needed to achieve approximately 632.8 kg/cm (9000 psi) compressive strength at 28-d (28-days). Similarly, a water/cement ratio of 0.28 and a cement content of 460 kg/cm (780 lb/yd³) were needed to achieve approximately 773.4 kg/cm (11,000 psi) compressive strength at 28-d. Three intermediate mixtures were designed to contain 389,407 and 425 kg/m³ (respectively 660, 690, and 720 lb/yd³) cement content, and 0.327, 0.31, and 0.30 water/cement ratio, respectively. The properties of these five portland cement concrete mixtures were compared with corresponding concrete mixtures made with blended portland cements containing 5%, 10% 15%, 20% and 30% RHA respectively. The same quantity of the superplasticizer (9.9 liters/m³ (7 1/2 liters per cu. yd) concrete) was used in every case, therefore the slump varied from 17.7-25.4 cm (7 to 10 inches). The mix proportions for each of the five reference concrete mixtures, as well as corresponding mixtures containing blended RHA cements containing 5 to 30% RHA No. 1 (i.e. Tests A-E), are shown in Table 3.

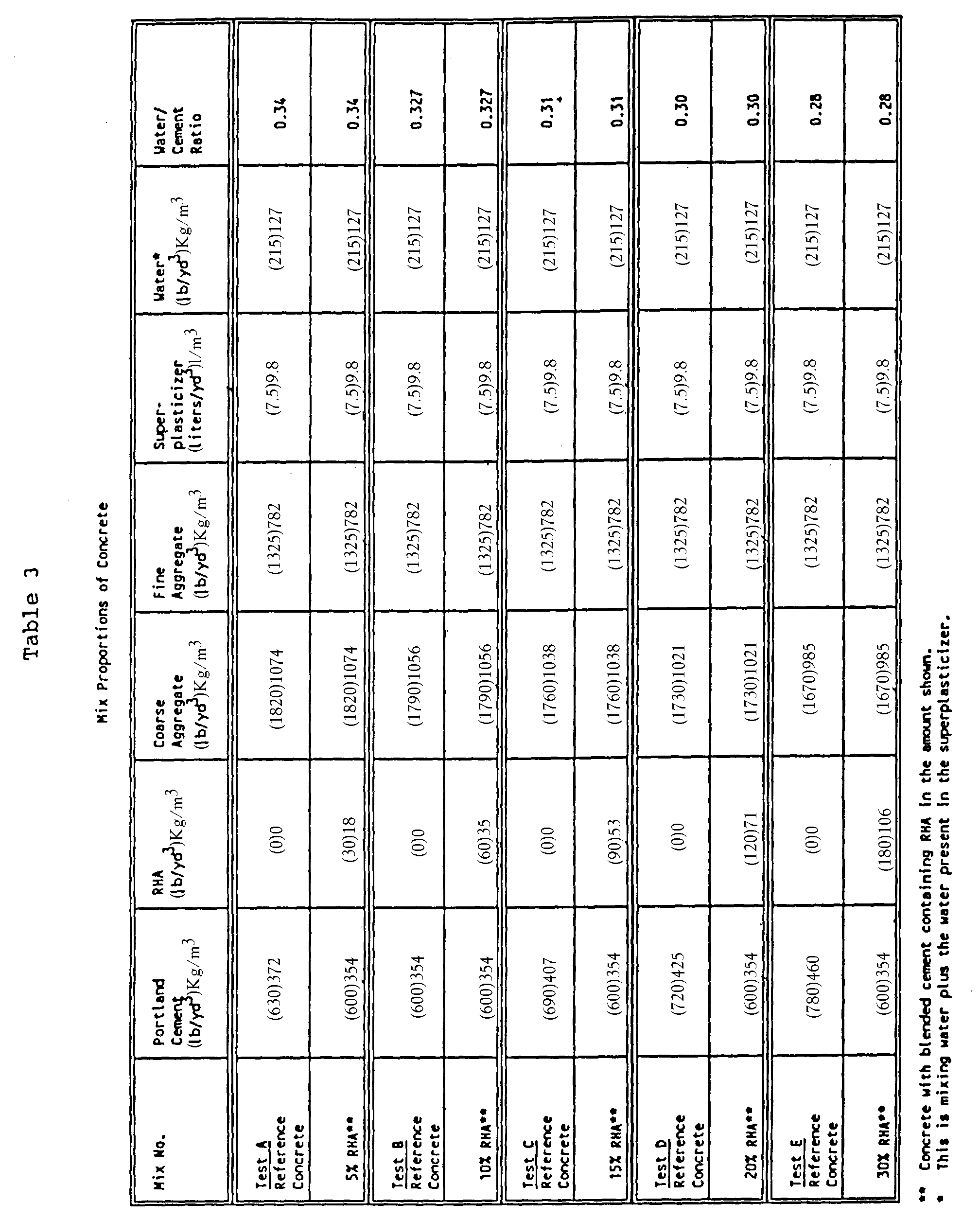

ASTM Standard test procedures, such as given by ASTM C 192 and C 39 were used for mixing (except for the concrete mixture with RHA-U as described below in Example 7), casting, curing, and testing the properties of concrete mixtures. Cylindrical, 10.2 by 20.3 cm (4 by 8 inches), triplicate specimens were used for determination of compressive strength at 3, 7, and 28 days. The 28-day standard-cured,10.2-20.3 cm (4 by 8-inch) concrete specimens were also used for testing permeability to chloride ions by the AASHTO T-277 method which, as discussed below, is now a commonly used test for evaluating the general durability of concrete.

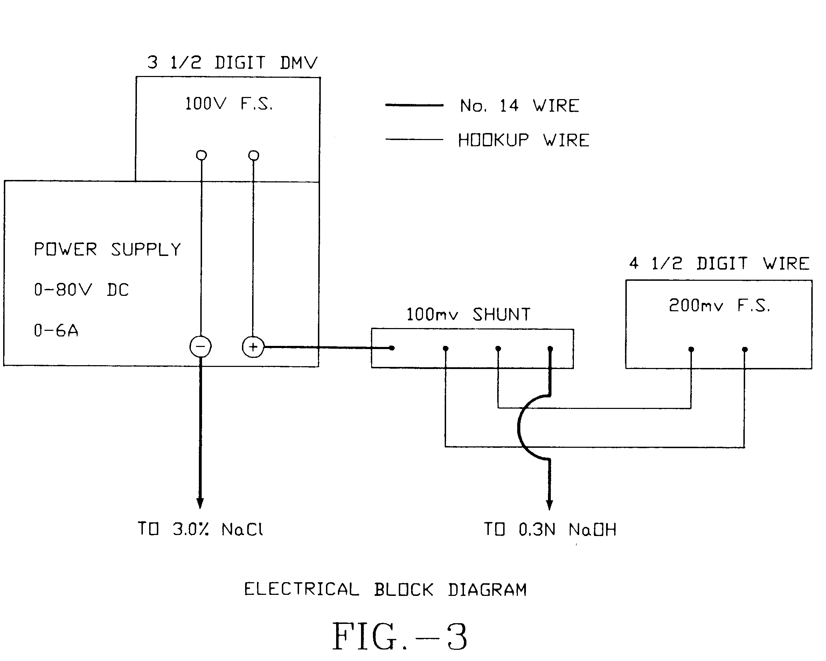

It is universally accepted that permeability of concrete to water is the most important property which determines the durability to most of the processes of concrete deterioration, such as cracking due to freezing and thawing cycles, sulfate attack, alkali-aggregate attack, and corrosion of reinforcing steel. The tests for water permeability are very cumbersome and time consuming but a chloride permeability test, in accordance with the AASHTO T-277 methods, is fairly simple and rapid. There is a high correlation between the results obtained in the chloride permeability test and the results obtained in tests for water permeability (i.e. if a product has decreased permeability to chloride it will also have decreased permeability to water). The AASHTO T-277 test, based on the work of D. Whiting of Portland Cement Association (FHWA Report No. RD-81/119, August 1981), involves monitoring of the amount of electrical current passed through a 10.2 cm (4-inch) diameter x 5.1 cm (2-inch) thick concrete disk. One end of the test specimen is immersed in a 3% NaCl solution (See, Figure 3) and the other in a 0.3N NaOH solution. It is possible to accelerate the migration of chloride ions across the specimen by application of 60 volts d.c. potential. The total charge that is measured over a 6 hour (6-h) period is assumed to be related to the chloride permeability of concrete.

In this test, concretes which permit more than 4,000 coulombs are rated as highly permeable; those which permit more than 2,000 coulombs but less than 4,000 are rated as moderately permeable; those which permit more than 1,000 coulombs but less than 2,000 are assumed to have low permeability; and those which permit less than 1,000 coulombs are assumed to have very low permeability (p.127, Report No. FHWA/RD-81/119, August 1981). Note that ordinary portland cement concretes exhibit 9,000-12,000 coulombs chloride permeability in the AASHTO T-277 test. The permeability test used in U.S. Patent No. 4,829,107 was stated to be a modification of the AASHTO T-277 permeability test. Unfortunately the permeability test results disclosed in the 4,829,107 patent to Kindt are given in ohms and since the '107 patent does not fully explain the test methods employed, it is impossible to convert the '107 test results into coulombs and therefore have an accurate comparison of the '107 patent permeability test results with the permeability results obtained in the present invention and described below.

Using the materials and procedures described above, the properties of the concrete mixtures of Tests A-E (See, Table 3) are summarized in Table 4. Note that the compressive strength and the permeability test data are average values of triplicate measurements. The properties of fresh concrete and compressive strength of hardened concrete are as expected. For instance, in the 5 to 30% RHA substitution range in the blended cements, the 3-day and 7-day compressive strengths are not significantly different from the reference concretes, however the 28-day strength tends to be somewhat higher as a result of the pozzolanic reaction of RHA during the 7 to 28-day period.

During the course of testing for permeability with the AASHTO Method T-277, a very steep drop in the permeability of concretes containing blended cements with more than 5% RHA was observed. The following examples will fully illustrate the present invention.

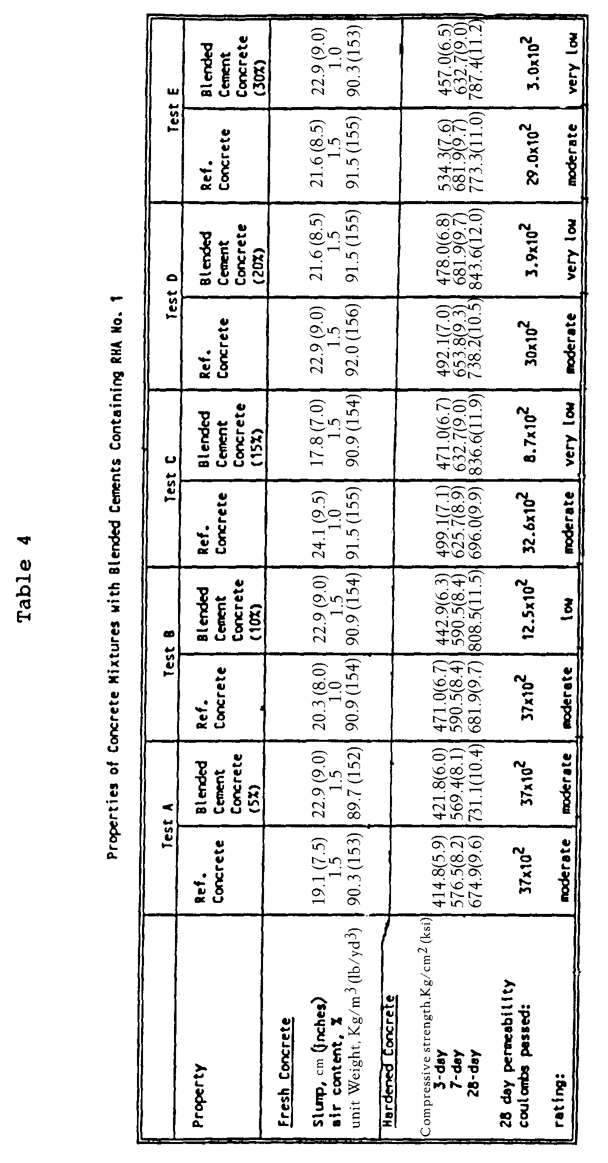

Example 1: The results from Test A (see, Table 4) show that the compressive strength and the chloride permeability of the concrete made from the blended cement containing 5% RHA were somewhat affected in comparison to the reference portland cement concrete. However, Test B showed that when compared to the reference portland cement concrete, the 28-day compressive strength of the concrete made with the blended cement containing 10% was increased by approximately 18%, however, the permeability dropped to almost one-third of the reference permeability (from 3,500 to 1,250 coulombs) which improved the concrete permeability rating from moderate to low. (See Table 4).

Example 2: Test C showed that when compared to the reference portland cement concrete, the 28-day compressive strength of the concrete made with the blended cement containing 15% RHA was increased by approximately 20%, however the permeability dropped to almost one-fourth (from 3,260 to 870 coulombs) which improved the permeability rating from moderate to very low. (See Table 4).

Example 3: Test D showed that the 28-day compressive strength of the concrete made with the blended cement containing 20% RHA was increased by approximately 14%, however the permeability dropped to almost one-eighth (from 3,000 to 390 coulombs) which improved the permeability rating from moderate to very low.

Example 4: Test E showed that when compared to the reference portland cement concrete, the 28-day compressive strength of the concrete made with the blended cement containing 30% RHA was increased by approximately 2%, however the permeability dropped by almost an order of magnitude (2,900 to 300 coulombs) (See, Table 4). Another test comparable to Tests A-E was conducted for a concrete made from a blended cement containing 40% RHA No. 1. The resulting 28 day compressive strength of the concrete was 780.3 kg/cm (11.1 ksi) and the chloride permeability was 1,165 coulombs.

Example 5: To insure that the marked improvement in the impermeability of concrete resulting from the use of blended cements containing RHA is not limited to the cements containing a unique specimen of RHA (i.e. RHA No. 1), additional tests were conducted with blended cements containing RHA No. 2 and RHA No. 3. For this purpose, it was sufficient to investigate only one of the test mixtures, for instance, the concrete mixture used in Test B of Table 3. Therefore, using the materials and mix proportions of Test B (Table 3), in Test F two additional concrete mixtures were made with blended cements containing 10% of either RHA No. 2 or RHA No. 3. In order to obtain a more homogeneous product, all three ashes were lightly ground to approximately 10% residue on No. 200 mesh standard sieve (75µm). (That is 10% of the particles were larger than 75µm and 90% were smaller.) Properties of concrete made with blended cements containing the three different brands of are compared in Table 5. Table 5 shows that the properties of fresh concrete as well as of hardened concrete including the permeability, were not significantly affected by the substitution of RHA No. 2 or RHA No. 3 for RHA No. 1. Note that compared to the reference concrete mixture (3,500 coulombs), which has a moderate permeability rating according to the recommended specifications for the AASHTO test, all three blended cements containing 10% RHA of the different types of gave a low permeability rating (1,000-2,000 coulombs). Thus, the impermeability-improving benefit in concrete mixtures from the use of blended cements containing low percentages of RHA is not limited to the cements containing RHA No. 1; in fact, this benefit is available for RHA types with a wide range of physical-chemical characteristics including those represented by lightly ground RHA No. 1, RHA No. 2, and RHA No. 3 (See, Table 1 for the composition of the various RHAs).

**Table 5.**

| Comparison of Properties of Concrete with Blended Cements Containing 10% RHA of Different Types | | | | |
|---|---|---|---|---|
| | Test B | | Test F | |
| Properties | ref. Concrete | Blended cement concrete (RHA No. 1) | Blended cement concrete (RHA No.2) | Blended cement concrete (RHA No.3) |
| Fresh Concrete | | | | |
| Slump, cm (inches) | 20.3 (8.0) | 22.5 (9.0) | 20.3 (8.0) | 18.7 (7.5) |
| air content, % | 1.0 | 1.5 | 1.0 | 1.0 |
| unit Weight, lb/yd³ | 154 | 154 | 154 | 153 |
| Kg/m³ | 90.9 | 90.9 | 90.9 | 90.3 |
| Hardened Concrete | | | | |
| Compressive strength, Kg/cm (ksi) | | | | |
| 3-day | 471.0 (6.7) | 442.9 (6.3) | 442.9 (6.3) | 386.7 (5.5) |
| 7-day | 590.5 (8.4) | 590.5 (8.4) | 611.6 (8.7) | 604.6 (8.6) |
| 28 day | 681.9 (9.7) | 808.5 (11.5) | 801.4 (11.4) | 773.3 (11.0) |
| 28 day permeability | | | | |
| coulombs passed: | 35x10 | 12.5x10 | 11.5x10 | 17.5x10 |

Example 6: ASTM Class F fly ash is now the most commonly used pozzolanic admixture in the U.S., but it is known to be much less reactive than amorphous RHA and takes substantially longer curing periods than 28 days to develop high strength and impermeability. This example illustrates how a partial replacement of fly ash with RHA can make a drastic improvement in the impermeability of concrete even at 28-d. The properties of a reference concrete mixture containing 398.2 kg/m³ (675 lb/yd³) portland cement, 885 kg/m³ (1500 lb/yd³) fine aggregate, 994 kg/m³ (1600 lb/yd³) coarse aggregate, 4 liters/m³ (3 liters/yd³) superplasticizer, and 140 kg/m³ (237 lb/yd³) water were compared with corresponding mixtures containing a 20% fly ash additive by weight of the cement (i.e., 80 kg/m³ (135 lb/yd³) fly ash), or 10% Class F fly and 10% (30.6 kg (67.5 lb) each of Class F fly ash and RHA No. 1) All the fly ash used in this Example met the ASTM C 595 physical and chemical requirements of Class F fly ash. The 28-d compressive strength and permeability test data are as follows:

| Concrete mixture | Compressive strength, Kg/cm (ksi) | Permeability, coulombs |
|---|---|---|
| Reference concrete | 611.6 (8.7) | 2,930 |
| 20% fly ash addition | 590.5 (8.4) | 2,270 |
| 10% fly ash + 10% RHA | 674.5 (9.6) | 4,50 |

The data shows that the use of 20% Class F fly ash alone as an additive in concrete did not result in a significant change in the 28-day compressive strength and permeability of concrete. The concrete permeability rating as per the AASHTO test was "moderately permeable" for both the reference concrete and the concrete containing fly ash without RHA. Whereas the addition of 10% fly ash and 10% RHA increased the strength by only 10%, it reduced the coulombs passed to approximately one-seventh of the value obtained by the reference concrete, and one-fifth of the value obtained by the concrete containing just the fly ash. The very low rating exhibited by the concrete mixture containing 10% fly ash and 10% RHA provides a method for making highly impermeable concretes using fly ash-RHA mixtures containing only 10% RHA. However, as shown in Table 4, about 15% or more RHA by weight of cement was needed to obtain a very low permeability rating when RHA alone was used. The improved properties of portland cement concrete resulting from the addition of 10% RHA by weight of the portland-RHA cement to a concrete, which already contained fly ash as a mineral admixture, can also be obtained if a blended Type IP or Type I(PM) cement containing pozzolanic or cementitious admixtures, as defined by ASTM C 595 are used in place of pure portland cement. It is not essential to use pure portland cement (ASTM C 150) for the purposes of obtaining increased compressive strength and low or very low permeability. Similar results may be obtained by using Type 1P or Type I(PM) blended hydraulic cement, instead of pure portland cement.

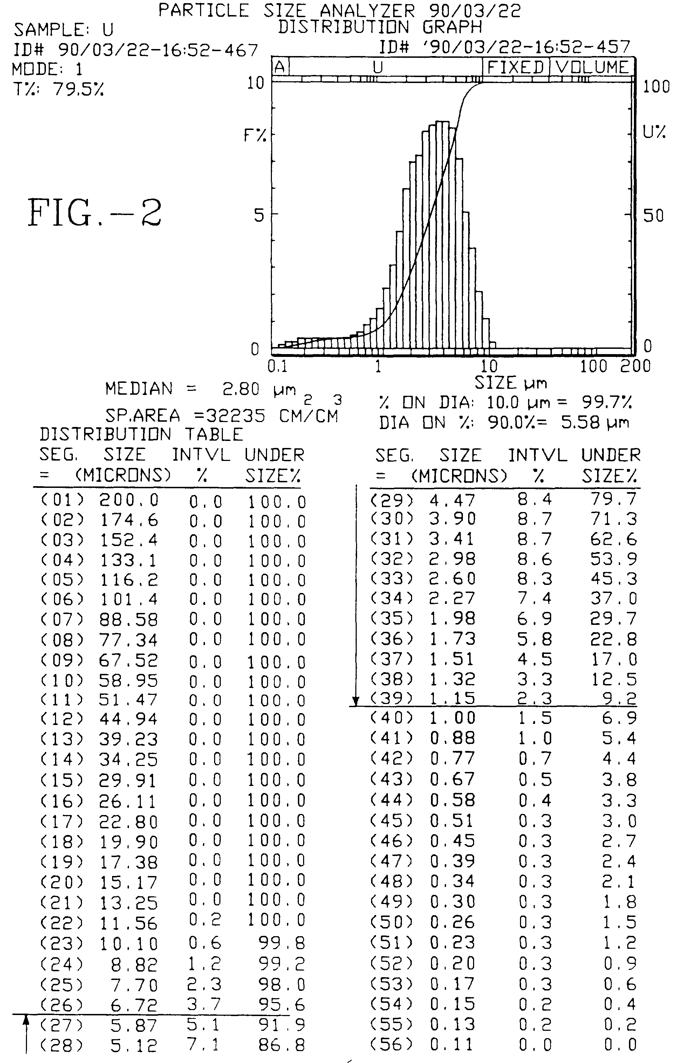

Example 7: This example illustrates the particle size range of RHA that is covered by this invention. For this test, RHA No. 1 was used in three different particle size ranges as described below:
(Sample L): In the as-received condition 75% of particles in the whole sample were above 75µm and the surface area was 24.3 m/g by B.E.T. nitrogen adsorption.
(Sample G): This was the material produced by lightly grinding Sample L so that 80% of the particles were in the range of 10 to 77 µm and the median particle diameter was 38µm (See Figure 1 for a full particle size analysis). The B.E.T. surface area by nitrogen adsorption was 25.5 m/g, which shows that light grinding had little or almost no effect on the surface area. As stated above, most of the described tests (e.g., Tests A-E) were carried out with this RHA (i.e. lightly ground RHA No. 1).
(Sample U): This is ultra-finely ground ash so that 80% of the particles are in the 1-6 µm range and the median particle diameter is approximately 3 µm (see Figure 2 for a full particle size analysis). The B.E.T. surface area of the sample by nitrogen adsorption is 26.5 m/g, which shows again that grinding of RHA has little or no effect on the surface area since most of the surface resides in the cellular structure of the material. Due to the high surface charges developed by ultra-fine grinding, the powder has a tendency to flocculate.
The incorporation of this ash in the form of dry powder into the concrete mixture, using the standard mixing procedure (ASTM C 192), was difficult because the material could not be uniformly dispersed. As a result, the mixing procedure of the concrete structure containing RHA-U was modified as follows. The ash was first dispersed in the form of a slurry, using the mixing water and the superplasticizers specified for use in the concrete mixture. To the slurry, portland cement, fine aggregate, and coarse aggregate were added during the mixing operation.
Concrete mixtures having the mix proportions of Test B (see Table 3) were made with blended cements containing 10% RHA No. 1 of three different particle size, L, G. and U. The resulting 28-day compressive strength and permeability test data are shown in Table 6.

**Table 6**

| Concrete mixture | Compressive strength, Kg/cm (ksi) | Permeability, coulombs |
|---|---|---|
| Reference concrete | 681.9 (9.7) | 3,500 |
| 10% RHA-L | 696.0 (9.9) | 3,300 |
| 10% RHA-G | 808.5 (11.5) | 1,250 |
| 10% RHA-U | 843.5 (12.0) | 880 |

The data shows that the use of as-received RHA containing very large particles (e.g. Sample L, where 75% of the particles are greater than 75µm) did not result in any improvement in blended cement concrete properties, such as strength and impermeability. This may be due to lack of a homogeneous distribution of RHA in the concrete mixture. When compared to the reference concrete, the blended cement products containing the lightly-ground RHA (Sample G) and finely-ground RHA (Sample U) showed relatively small increases in the compressive strength (19, and 23%, respectively). However, they showed dramatic improvements in impermeability. For instance the coulombs passed into the AASHTO T-277 test were reduced to approximately one-third and one-forth, respectively (i.e., resulting in the permeability rating from moderate to low or very low). It is suspected that a better homogeneity of concrete made from blended cements containing finer particles of RHA is important for reducing the permeability. However it is clear from the data that for this purpose ultra-fine grinding of the type represented by Sample U is not necessary. For most practical purposes, a rating of "low permeability" is sufficient for good concrete durability, and the field performance of concretes with 880 and 1250 coulombs chloride permeability is not expected to be very different from each other.

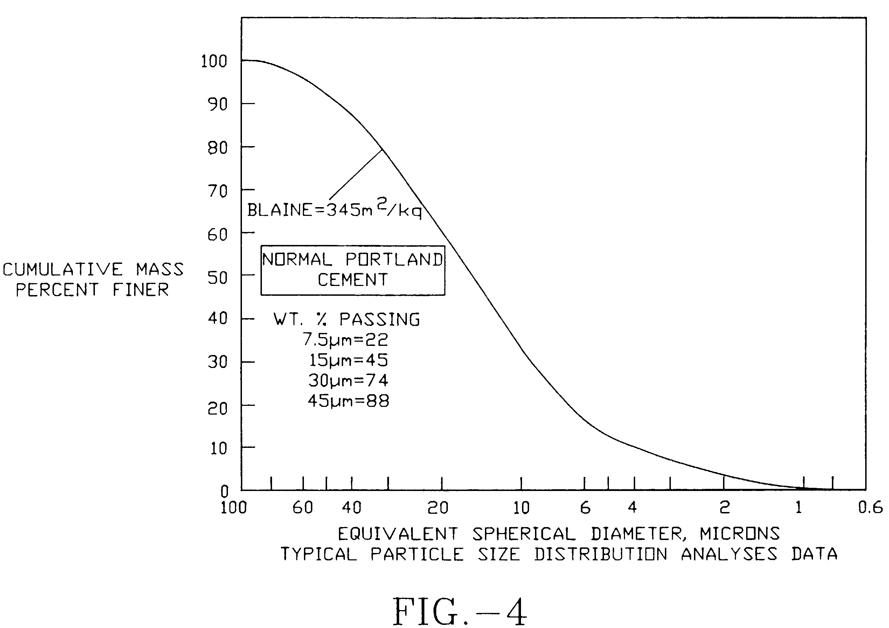

The types of pozzolanic RHA used herein conform to a broad range of physical-chemical characteristics, such as 20-100 m/g B.E.T. surface area by nitrogen adsorption, up to 35% carbon content, and 60 to 95% silica, of which up to 10% can be crystalline. Since the desired particle size distribution range of RHA in the blended cements described in Tests A-F, etc. is not much different than a typical ASTM Type I portland cement (See, Figure 4) the size range of RHA particles in a interground portland-RHA cement can be expected to be similar to the portland cement size range shown in Figure 4. The unique property of cement products, such as those in Tests B-F (i.e., having low or very low permeability resulting from the incorporation of 10% to 40% RHA in the blended cements), can be achieved from the use of ashes with a broad range of particles as long as most of the particles conform to a particle size distribution in the range of 10 to 75µm.

### ACCELERATION OF CONCRETE EARLY STRENGTH

The early strength of concrete mixtures containing fly ash is accelerated by the addition of RHA.

Example 8: ASTM Type 1 standard portland cement, a quartzitic sand (3.0 fineness modulus), and a crushed limestone with 12 mm (1/2-in.) maximum size were used to make a reference (control) concrete. The pozzolans used in the test mixtures included an ASTM Class F fly ash and an amorphous rice hull ash with 90% silica content, 5% carbon content, and 20 m/g B.E.T. surface area. The ash had been pulverized to contain less than 10% particles above 75 µm size.

ACI guidelines for proportioning normal-weight concrete mixtures were used to determine the mix proportions for concrete with f_{c} = 27 MPa (4000-psi), and a 125-150 mm (5-6 in.) The mix proportions for the control mixture (Mix No. 1) are shown in the left-hand column of Table 7. The middle column of Table 7 (Mix No. 2) shows the mix proportions of a test mixture containing 20% fly ash by weigh of cement, used as a partial replacement for cement. The right-hand column (Mix No. 3 shows the mix proportion of another test mixture, which contains 10% fly ash and 10% of the pulverized rice hull ash.

**Table 7.**

| Mix Proportions of Concrete Mixtures, Kg/m³ (lb/yd³) | | | |
|---|---|---|---|
| Material | Mix No. 1 | Mix No. 2 | Mix No. 3 |
| Cement | 362 (613) | 297 (500) | 297 (500) |
| Fly ash | - | 74 (124) | 37 (62) |
| Rich hull ash | - | - | 37 (62) |
| Coarse Aggregate | 1092 (1840) | 1104 (1860) | 1115 (1880) |
| Fine Aggregate | 742 (1250) | 730 (1239) | 724 (1240) |
| Water | 192 (323) | 181 (305) | 192 (324) |
| Water/cementitious ratio | 0.53 | 0.49 | 0.52 |

All the concrete mixtures showed excellent workability. The water-reducing characteristic of the fly ash is obvious from the fact that compared to the control mix, approximately 6% less water content was needed to obtain a similar slump (150 mm (6 in.)). This was probably due to the very high internal surface of the rice hull ash, Mix No. 3 gave a lower slump 125 mm (5 in.) instead of 150 mm (6 in.)) at a water content similar to the reference mix, although this concrete was found to be more cohesive and workable than the control.

ASTM standard test procedures were used for mixing, casting, and curing concrete. Cylindrical, 100 by 200 mm (4 by 8 in.) specimens were made for testing the uniaxial compressive strength of concrete at test ages 3-, 7-, and 28-day. The compressive strength data, average of triplicate specimens, are shown in Table 8.

**Table 8.**

| Compressive Strength of Concrete Mixtures, MPa (psi) | | | |
|---|---|---|---|
| Test Age | Mix No. 1 | Mix No. 2 | Mix No. 3 |
| 3-d | 11.9 (1720) | 9.0 (1310) | 10.4 (1510) |
| 7-d | 20.2 (2930) | 16.5 (2390) | 17.4 (2530) |
| 28-d | 33.4 (4850) | 28.0 (4060) | 29.8 (4320) |

Compared to the control, the concrete mixture containing only the fly ash gave approximately 20% lower compressive strength at early ages (3-d, 7-d) than the control. At 28-d the strength difference was somewhat lower (17%) which is indicative of the influence of slow pozzolanic reaction. This is consistent with the earlier observations of many researchers. Compared to Mix No. 2 (containing fly ash only), the compressive strength of concretes containing fly ash and rice hull ash (Mix No. 3) were found to be significantly higher at all test ages. Instead of 17-20% lower strengths with fly ash concretes the strengths of Mix No. 3 concretes were only 10-12% lower than the reference concrete at all test ages. Rice hull ash is therefore effective in making up a portion of the early-age strength loss attributable to the use of fly ash alone as a pozzolan.

### INDUSTRIAL APPLICABILITY

Due to the impermeability-improving and early strength acceleration characteristics of RHA used in this invention, RHA has the potential of becoming a valuable material for the cement and concrete industries. It can be a pozzolanic additive for producing blended portland cements or an anhydrous pozzolanic admixture for direct addition to concrete mixtures.

## Claims

1. A composition for use in concrete or mortar comprising a cement selected from portland cements and pozzolan-portland blended hydraulic cements and from 5-30% siliceous ash by weight of cement, said ash being from crop residue and from 60-95% by weight of silica and at least 90% of said silica is amorphous, wherein at least 10% of said ash particles have a size greater than 75 micrometers and the ash particles have a mean particle diameter measured by laser-light-scattering of at least 6 micrometers and a B.E.T surface area of at least 20 m/g.

2. The composition of Claim 1 wherein the median particle diameter is from 15 to 38 micrometers.

3. The composition of Claim 1 or 2 wherein the crop residue is rice hull.

4. The composition of any of Claims 1 to 3 wherein the cement and ash are anhydrous.

5. The composition of any of the preceding claims wherein the pozzolan-portland blended hydraulic cement is Type I(PM) or Type IP hydraulic cement.

6. The composition of any of the preceding claims comprising 10-30% ash by weight of cement.

7. The composition of claim 6 comprising 10 - 15% ash by weight of cement.

8. The composition of claim 6 comprising 15 - 30% ash by weight of cement.

9. A cement product comprising a composition according to any one of claims 1 to 8, fine aggregate and coarse aggregate.

10. A method for obtaining a composition for use in concrete or mortar, comprising mixing a cement, selected from portland cements and pozzolan-portland blended hydraulic cements, and from 5-30% siliceous ash by weight of cement, said ash being from crop residue and from 60-95% by weight of silica and at least 90% of said silica is amorphous, wherein at least 10% of said ash particles have a size greater than 75 micrometers and the ash particles have a mean particle diameter measured by laser-light-scattering of at least 6 micrometers and a B.E.T. surface area of at least 20 m/g.

11. The method of claim 10 wherein the cement and/or ash are as described in any one of claims 2 to 5.

12. The method of claim 10 or 11 wherein the ash is used in an amount capable of obtaining a composition in which the proportion of ash to cement is as described in any one of claims 6 to 8.

13. A method for obtaining a cement product comprising mixing a composition according to any one of claims 1 to 8, fine aggregate and coarse aggregate.

14. A method for obtaining a cement product having a better than moderate permeability comprising:
(a) mixing a hydraulic cement composition comprising effective amounts of a composition according to any one of claims 1 to 8, fine aggregate, coarse aggregate and water; and
(b) allowing the cement composition to harden.

## Patentansprüche

1. Zusammensetzung zur Verwendung in Beton oder Mörtel, die einen aus Portlandzementen und gemischten hydraulischen Puzzolan-Portlandzementen gewählten Zement und von 5 - 30 % vom Gewicht des Zementes kieselsäurehaltige Asche umfaßt, wobei die besagte Asche aus Feldfruchtrückständen stammt und 60 - 95 Gew.-% Kieselsäure enthält und mindestens 90 % der besagten Kieselsäure amorph ist, wobei der mindestens 10 % der besagten Ascheteilchen eine Größe oberhalb von 75 m aufweisen und die Ascheteilchen einen mit Laserlichtstreuung gemessenen mittleren Teilchendurchmesser von mindestens 6 Mikrometer und eine BET-Oberfläche von mindestens 20 m/g haben.

2. Zusammensetzung nach Anspruch 1, in der der mittlere Teilchendurchmesser zwischen 15 und 38 Mikrometer beträgt.

3. Zusammensetzung nach Anspruch 1 oder 2, in der die Feldfruchtrückstände Reishülsen sind.

4. Zusammensetzung nach einem der Ansprüche 1 bis 3 , in der der Zement und die Asche wasserfrei sind.

5. Zusammensetzung nach einem der vorherigen Ansprüche, in der der gemischte hydraulische Puzzolan-Portlandzement hydraulischer Zement des Typs I (PM) oder des Typs IP ist.

6. Zusammensetzung nach einem der vorherigen Ansprüche, die 10 bis 30 % vom Gewicht des Zementes Asche umfaßt.

7. Zusammensetzung nach Anspruch 6, die 10 bis 15 % vom Gewicht des Zementes Asche umfaßt.

8. Zusammensetzung nach Anspruch 6, die 15 bis 30 % vom Gewicht des Zementes Asche umfaßt.

9. Zementprodukt, das eine Zusammensetzung nach einem der Ansprüche 1 bis 8, feinen Zuschlagstoff und groben Zuschlagstoff umfaßt.

10. Verfahren zur Herstellung einer Zusammensetzung zur Verwendung in Beton oder Mörtel, das das Mischen eines aus Portlandzementen und gemischten hydraulischen Puzzolan-Portlandzementen gewählten Zements mit von 5 - 30 % vom Gewicht des Zementes kieselsäurehaltiger Asche umfaßt, wobei die besagte Asche aus Feldfruchtrückständen stammt und 60 - 95 Gew.-% Kieselsäure enthält und mindestens 90 % der besagten Kieselsäure amorph ist, wobei mindestens 10 % der besagten Ascheteilchen eine Größe oberhalb von 75 Mikrometer aufweisen und die Ascheteilchen einen mit Laserlichtstreuung gemessenen mittleren Teilchendurchmesser von mindestens 6 Mikrometer und eine BET-Oberfläche von mindestens 20 m/g haben.

11. Verfahren nach Anspruch 10, wobei der Zement und/oder die Asche entsprechend einem der Ansprüche 2 bis 5 verwendet wird.

12. Verfahren nach Anspruch 10 oder 11, in dem die Asche in einer Menge verwendet wird, mit der eine Zusammensetzung erreicht werden kann, in der das Verhältnis von Asche zu Zement entsprechend einem der Ansprüche 6 bis 8 ist.

13. Verfahren zur Herstellung eines Zementprodukts, welches das Mischen einer Zusammensetzung nach einem der Ansprüche 1 bis 8, feinen Zuschlagstoffs und groben Zuschlagstoffs umfaßt.

14. Verfahren zur Herstelung eines Zementproduktes mit einer besseren als mäßigen Durchlässigkeit, welches umfaßt:
(a) das Mischen einer hydraulischen Zementzusammensetzung, die wirksame Mengen einer Zusammensetzung nach einem der Ansprüche 1 bis 8, feinen Zuschlagstoff, groben Zuschlagstoff und Wasser umfaßt; und
(b) das Aushärtenlassen der Zementzusammensetzung.

## Revendications

1. Composition destinée à être utilisée dans des bétons ou mortiers, comprenant un ciment choisi parmi les ciments Portland et les ciments hydrauliques mélangés pouzzolanes-Portland, et contenant de 5 % à 30 % en poids de cendres siliceuses par rapport au ciment, lesdites cendres provenant de résidus de cultures, et de 60 % à 95 % en poids de silice, au moins 90 % de ladite silice étant amorphe, composition dans laquelle au moins 10 % desdites particules de cendres ont une taille supérieure à 75 micromètres et les particules de cendres ont un diamètre moyen, mesuré par diffraction d'un faisceau laser, d'au moins 6 micromètres, et une surface par unité de masse B.E.T. d'au moins 20 m/g.

2. Composition selon la revendication 1, dans laquelle le diamètre moyen des particules est compris entre 15 et 38 micromètres.

3. Composition selon l'une des revendications 1 ou 2, dans laquelle les résidus de cultures sont des enveloppes de riz.

4. Composition selon l'une quelconque des revendications 1 à 3, dans laquelle le ciment et les cendres sont anhydrides.

5. Composition selon l'une quelconque des revendications précédentes, dans laquelle le ciment hydraulique mélangé pouzzolanes-Portland est un ciment hydraulique de type I (PM) ou de type IP.

6. Composition selon l'une quelconque des revendications précédentes, comprenant 10 % à 30 % en poids de ciment.

7. Composition selon la revendication 6, comprenant 10 % à 15 % en poids de cendres par rapport au ciment.

8. Composition selon la revendication 6, comprenant 15 à 30 % en poids de cendres par rapport au ciment.

9. Produit de ciment comprenant une composition selon l'une quelconque des revendications 1 à 8, des agrégats fins et des agrégats grossiers.

10. Procédé d'obtention d'une composition destinée à être utilisée dans des bétons ou mortiers, caractérisé en ce qu'il consiste à mélanger un ciment choisi parmi les ciments Portland et les ciments hydrauliques mélangés pouzzolanes-Portland, et contenant de 5 % à 30 % en poids de cendres siliceuses par rapport au ciment, lesdites cendres provenant de résidus de cultures, et de 60 % à 95 % en poids de silice, au moins 90 % de ladite silice étant amorphe, composition dans laquelle au moins 10 % desdites particules de cendres ont une taille supérieure à 75 micromètres et les particules de cendres ont un diamètre moyen, mesuré par diffraction d'un faisceau laser, d'au moins 6 micromètres, et une surface par unité de masse B.E.T. d'au moins 20 m2/g.

11. Procédé selon la revendication 10, dans lequel le ciment et/ou les cendres sont tels que décrit(s) dans l'une quelconque des revendications 2 à 5.

12. Procédé selon la revendication 10 ou 11, dans lequel les cendres sont utilisées selon une quantité permettant d'obtenir une composition dans laquelle la proportion cendres-ciment est telle que décrite dans l'une quelconque des revendications 6 à 8.

13. Procédé d'obtention d'un produit de ciment caractérisé en ce qu'il consiste à mélanger une composition selon l'une quelconque des revendications 1 à 8, des agrégats fins et des agrégats grossiers.

14. Procédé d'obtention d'un produit de ciment présentant une perméabilité meilleure que modérée, comprenant :
(a) une étape dans laquelle on mélange une composition de ciment hydraulique comportant des quantités effectives d'une composition selon l'une quelconque des revendications 1 à 8, des agrégats fins, des agrégats grossiers et de l'eau ;
(b) une étape dans laquelle on laisse durcir la composition de ciment.
